# EUROPEAN PATENT APPLICATION

(11) **EP 2 878 581 A1**
(43) Date of publication of application: **03.06.2015**
(21) Application number: 14154496.5
(22) Date of filing: 10.02.2014
(51) Int. Cl.: C02F 1/44, C02F 9/00, B01D 61/02, C02F 11/06, C02F 11/12, C02F 1/32, F23G 7/00, C02F 1/16, C02F 3/12, C02F 11/04

(54) **A wastewater purification system**

(30) Priority: 02.12.2013 US 201361910485 P
(71) Applicant: Lappeenrannan Teknillinen Yliopisto, 53851 Lappeenranta (FI)
(72) Inventor: Pyrhönen, Juha, 53850 Lappeenranta (FI); Marttila, Esa, 53851 Lappeenranta (FI); Ruottu, Seppo, 48800 Kotka (FI); Mänttäri, Mika, 53100 Lappeenranta (FI)
(74) Representative: Berggren Oy Ab

(57) **Abstract**

A wastewater purification system comprises first purification equipment (101) (e.g. activated sludge, membrane bioreactor, nitrogen recovery equipment) for receiving wastewater (120) and for outputting first time purified wastewater (121) and sludge (122), and second purification equipment (102) for receiving the first time purified wastewater (121) and for outputting second time purified wastewater (123) and purification residue (127). The second purification equipment (102) is based on the reverse osmosis and/or nanofiltration technology (105). The wastewater purification system further comprises combustion equipment (103) for burning the first sludge (122) so as to produce heat (125), and dryer equipment (104) for drying the purification residue (127) with the aid of the produced waste heat (125). Hence, the first sludge (122) produced by the first purification equipment (101) is used for producing heat (125) for drying the purification residue (127) which is produced by the reverse osmosis and/or nanofiltration technology (105) and whose initial water content is so high that it is problematic to be disposed of without drying.

## Description

### Field of the invention

The invention relates generally to purification of wastewater such as, for example but not necessarily, sewage water. More particularly, the invention relates to a wastewater purification system and to a process for wastewater purification.

### Background

Reverse osmosis "RO" is a water purification technology based on a semipermeable membrane. In normal osmosis process, water or other solvent naturally moves from an area of lower solute concentration through a membrane to an area of higher solute concentration. The movement of solvent is driven to reduce the free energy of the system by equalizing the solute concentrations on each side of the membrane. As a corollary, osmotic pressure is generated. In the reverse osmosis, an applied pressure is used to overcome the above-mentioned osmotic pressure. The reverse osmosis is capable of removing many types of molecules and ions from solutions, and thus the reverse osmosis is used both in industrial processes and in processes for producing potable water. The reverse osmosis involves a diffusive mechanism so that separation efficiency is dependent on solute concentration, pressure, and water flux rate. The reverse osmosis is commonly known for its use in drinking water purification from seawater. Another technology suitable for water purification is a membrane separation process known as the nanofiltration "NF" technology. This technology is essentially a liquid phase one, because it separates a range of inorganic and organic substances from solution in a liquid that can be, for example but not necessarily, water. This is done by diffusion through a membrane, under pressure differentials that are considerably less than those for the reverse osmosis, but still significantly greater than those for ultrafiltration.

Purification techniques based on the reverse osmosis and the nanofiltration are, however, not free from challenges. One of the challenges is related to purification residue when the reverse osmosis and/or the nanofiltration are/is used for wastewater purification. The purification residue comprises a lot of nutrient substances and, due to the high water content of the purification residue, the amount of the purification residue can be so high that it can be problematic to dispose of the purification residue in an environmentally friendly way. For example, a medium-size wastewater purification system based on the reverse osmosis and/or the nanofiltration and having the purification capacity of for example 20000 cubic meters per day would produce as much as about 1000 - 2000 cubic meters purification residue per day. It is very challenging to dispose of this amount of the purification residue by soaking the purification residue into soil or in some other way. About 40 truck-loads of 30 cubic meters would be needed in each day for transferring the purification residue to a soakage area. It is worth noting that releasing the purification residue into inland waters or sea is actually the same as releasing the nutrient substances of the wastewater into the inland waters or sea. The situation is naturally different if, instead of purifying wastewater, drinking water is made from sea water. In this case, the content of the purification residue originates from the sea and thus the purification residue is typically returned back to the sea.

### Summary

The following presents a simplified summary in order to provide a basic understanding of some embodiments of the invention. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the invention, there is provided a new wastewater purification system based at least partly on the reverse osmosis "RO" and/or the nanofiltration "NF". A wastewater purification system according to the invention comprises:
- first purification equipment for receiving wastewater and for outputting first time purified wastewater and sludge,
- second purification equipment for receiving the first time purified wastewater and for outputting second time purified wastewater and purification residue, the second purification equipment comprising at least one of the following for purifying the first time purified wastewater: one or more reverse osmosis devices, one or more nanofiltration devices,

- combustion equipment for burning the sludge so as to produce heat, and
- dryer equipment for drying the purification residue with the aid of the heat produced by the combustion equipment.

Hence, the sludge produced by the first purification equipment is used for producing heat for drying the purification residue which is produced by the reverse osmosis and/or nanofiltration technology and whose initial water content is so high that it is problematic to be disposed of without drying. The first purification equipment may comprise for example an activated sludge plant. Furthermore, the first purification equipment may comprise for example a nitrogen recovery equipment and/or sludge drying equipment. Furthermore, in addition to burning the sludge, it is possible to burn other materials, such as e.g. dry waste unsuitable for recycling, if more heat power is needed.

In accordance with the invention, there is provided also a new process for wastewater purification. A process according to the invention comprises:
- purifying wastewater so as to produce first time purified wastewater and sludge,
- purifying the first time purified wastewater so as to produce second time purified wastewater and purification residue, the first time purified wastewater being purified with at least one of the following: one or more reverse osmosis devices, one or more nanofiltration devices,
- burning the sludge so as to produce heat, and
- drying the purification residue with the aid of the heat.

A number of exemplifying and non-limiting embodiments of the invention are described in accompanied dependent claims.

Various exemplifying and non-limiting embodiments of the invention both as to constructions and to methods of operation, together with additional objects and advantages thereof, will be best understood from the following description of specific exemplifying embodiments when read in connection with the accompanying drawings.

The verbs "to comprise" and "to include" are used in this document as open limitations that neither exclude nor require the existence of also un-recited features. The features recited in dependent claims are mutually freely combinable unless otherwise explicitly stated. Furthermore, it is to be understood that the use of "a" or "an", i.e. a singular form, throughout this document does as such not exclude a plurality.

### Brief description of the figures

Exemplifying and non-limiting embodiments of the invention and their advantages are explained in greater details below in the sense of examples and with reference to the accompanying drawings, in which:
figure 1 shows a functional block diagram of a wastewater purification system according to an exemplifying and non-limiting embodiment of the invention, and
figure 2 shows a flowchart of a process according to an exemplifying and non-limiting embodiment of the invention for wastewater purification.

### Description of exemplifying embodiments

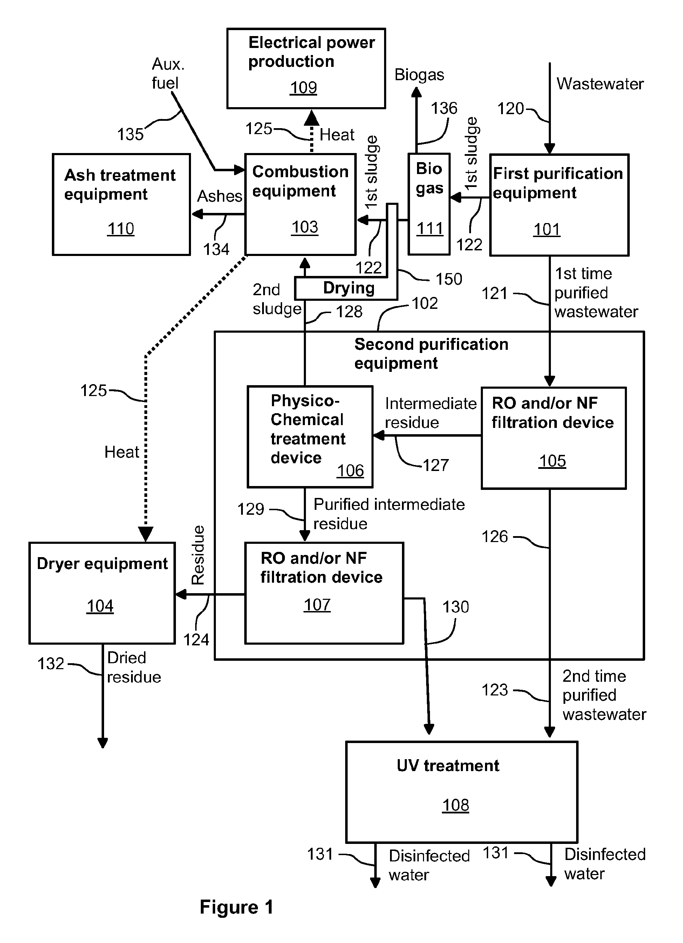

Figure 1 shows a functional block diagram of a wastewater purification system according to an exemplifying and non-limiting embodiment of the invention. The wastewater purification system comprises first purification equipment 101 for receiving wastewater 120 and for outputting first time purified wastewater 121 and first sludge 122. The first purification equipment may comprise, for example but not necessarily, an activated sludge plant and/or a membrane-bioreactor according to the prior art. Furthermore, the first purification equipment 101 may comprise for example nitrogen recovery equipment. In some cases, the first purification equipment 101 may further comprise sludge drying equipment which is advantageously mechanical drying equipment. The mechanical sludge drying equipment can be for example a drying centrifuge. The wastewater purification system comprises second purification equipment 102 for receiving the first time purified wastewater 121 and for outputting second time purified wastewater 123 and purification residue 124. The second purification equipment 102 is at least partly based on the reverse osmosis "RO" and/or the nanofiltration "NF" technology, and the second purification equipment comprises one or more reverse osmosis devices and/or one or more nanofiltration devices. The wastewater purification system comprises combustion equipment 103 for burning the first sludge 122 so as to produce heat. Heat flows are depicted with dashed line arrows 125 in figure 1. The wastewater purification system comprises dryer equipment 104 for drying the purification residue 124 with the aid of the heat produced by the combustion equipment 103. In the above-described wastewater purification system, the sludge 122 produced by the first purification equipment 101 is used, after centrifuging or drying in some other way, for producing heat for drying the purification residue 124 which is produced when using the reverse osmosis and/or nanofiltration technology and whose initial water content is so high that it is problematic to be disposed of without drying. The dryer equipment 104 produces dried purification residue 132 wherefrom some useful fractions can be separated. A part of the dried purification residue 132 can be subjected to thermal treatment. The dryer equipment 104 may comprise e.g. a multi-staged evaporator, and furthermore the dryer equipment 104 may comprise means for chemical treatment of the purification residue. A part of the purification residue can be converted for example into fertilizers.

In the exemplifying wastewater purification system illustrated in figure 1, the second purification equipment 102 comprises a first purification device 105 for receiving the first time purified wastewater 121 and for outputting a first part 126 of the second time purified water 123 and intermediate purification residue 127. The first purification device 105 comprises a first reverse osmosis "RO" device and/or a first nanofiltration "NF" device. The second purification equipment 102 comprises a physico-chemical treatment device 106 for receiving the intermediate purification residue 127 and for outputting second sludge 128 and purified intermediate purification residue 129. The second purification equipment 102 comprises a second purification device 107 for receiving the purified intermediate purification residue 129 and for outputting a second part 130 of the second time purified water 123 and the purification residue 124. The second purification device 107 comprises a second reverse osmosis device and/or a second nanofiltration device. The combustion equipment 103 is advantageously adapted to burn both the first and second sludges 122 and 128. Depending on the case, the physico-chemical treatment device 106 can be based on e.g. electrical coagulation, coagulation, or flocculation in combination with solids separation, crystallization, and/or oxidation. The physico-chemical treatment device 106 between the first and second purification devices 105 and 107 improves the yield of the purified water by removing substances so that the combination of the first and second purification devices 105 and 107 and the physico-chemical treatment device 106 is more efficient than a single purification device based on the reverse osmosis or nanofiltration.

A wastewater purification system according to an exemplifying and non-limiting embodiment of the invention further comprises ultraviolet treatment equipment 108 for disinfecting the second time purified water 123 so as to produce disinfected water 131.

In a wastewater purification system according to an exemplifying and non-limiting embodiment of the invention, the combustion equipment 103 comprises a circulating fluidized bed "CFB" combustion reactor. The circulating fluidized bed combustion reactor can be, for example but not necessarily, of the kind described in the publication WO2005037422. In this case, the circulating fluidized bed combustion reactor comprises an elongated and substantially vertical riser channel having a lower part and an upper part. The lower part of the riser channel is connected to a lower combustion chamber whereto the sludge to be burned is supplied and wherein the sludge is mixed with air and circulating material that can be for example sand. The sludge comprises at least the first sludge 122 and, in the case illustrated in figure 1, also the second sludge 128. The sludge catches fire in the lower combustion chamber and is transferred upwards thought the riser channel to an upper combustion chamber wherein the burning is finalized. The circulating fluidized bed combustion reactor comprises a separator section under the upper combustion channel. The separator section separates the combustion gases from the circulating material so that the combustion gases are removed via a gas exit passage and the circulating material is conducted back to the lower combustion chamber via return channels. The sludge burns when being mixed with the circulating material, and therefore the characterizing power density, kW/m³, of the circulating fluidized bed combustion reactor of the kind described above can be significantly higher than that of combustion reactors based on the heat transfer by radiation. Ashes 134 can be separated from the combustion gases with a cyclone separator, and furthermore the combustion gases can be cooled and subsequently filtered so as to remove harmful substances from the combustion gases. The wastewater purification system may comprise ash treatment equipment 110 for separating e.g. phosphorous and/or poisonous substances from the ashes 134.

In a wastewater purification system according to an exemplifying and non-limiting embodiment of the invention, the combustion equipment 103 comprises a pre-dryer for pre-drying the sludge prior to the burning the sludge, where the pre-drying is based on the heat produced by combustion equipment. The sludge comprises at least the first sludge 122 and, in the case illustrated in figure 1, also the second sludge 128. The pre-dryer can be for example a circulating fluidized bed dryer which is adapted to dry the sludge with the aid of combustion gases produced by the combustion reactor and the hot circulating material a part of which is circulated via the pre-dryer. After the pre-drying, the sludge is advantageously dry and granulated material.

A combustion equipment of the kind described above provides an exothermal combustion reaction, and thus the combustion equipment is capable of supplying heat power to the dryer equipment 104.

In a wastewater purification system according to an exemplifying and non-limiting embodiment of the invention, the combustion equipment 103 is adapted to burn auxiliary fuel 135 in addition to the sludge which comprises at least the first sludge 122 and, in the case illustrated in figure 1, also the second sludge 128. The auxiliary fuel 135 can be for example Solid Recovered Fuel "SRF".

A wastewater purification system according to an exemplifying and non-limiting embodiment of the invention comprises electrical power production equipment 109 which comprises a boiler for vaporizing working fluid with the aid of the heat produced by the combustion equipment, and an electrical turbo-machine for converting energy contained by the vaporized working fluid into electrical energy. The electrical power production equipment 109 can be for example an Organic Rankine Cycle "ORC" energy converter that uses suitable organic fluid as the above-mentioned working fluid. The organic fluid can be, for example but not necessarily, one of the siloxanes. It is also possible that the energy converter uses suitable non-organic fluid as the working fluid. The electrical turbo-machine of the electrical power production equipment 109 is advantageously a high-speed machine whose rotational speed can be as high as e.g. 10000...60000 rpm. The electrical energy outputted by the electrical turbo-machine can be used for satisfying the energy need of the wastewater purification system, e.g. for producing the pressure needed in the reverse osmosis. In some cases it may be possible that the wastewater purification system is operated merely by the energy contained by waste. Possible surplus of the electrical energy, if any, can be supplied to an electrical power grid with the aid of a frequency converter.

A wastewater purification system according to an exemplifying and non-limiting embodiment of the invention comprises biogas production equipment 111 for receiving the first sludge 122 from the first purification equipment 101, for producing biogas 136 with the aid of the first sludge, and for outputting the first sludge to the combustion equipment. Also the second sludge 128 can be used for the biogas production. In many cases, drying equipment is needed between the biogas production equipment 111 and the combustion equipment 103 in order to remove water from the first sludge 122. The drying equipment can be for example mechanical drying equipment such as e.g. a drying centrifuge. Furthermore, in many cases, it is advantageous that also the second sludge 128 is dried, e.g. by centrifuging, prior to delivering the second sludge to the combustion equipment 103. In figure 1, a block 150 represents the drying.

The above-described wastewater purification system makes it possible, at least in some cases, to arrange a closed water circulation in a community, e.g. a town or a village, and/or in an industrial plant, and/or in other systems where clean water is needed and wastewater is produced.

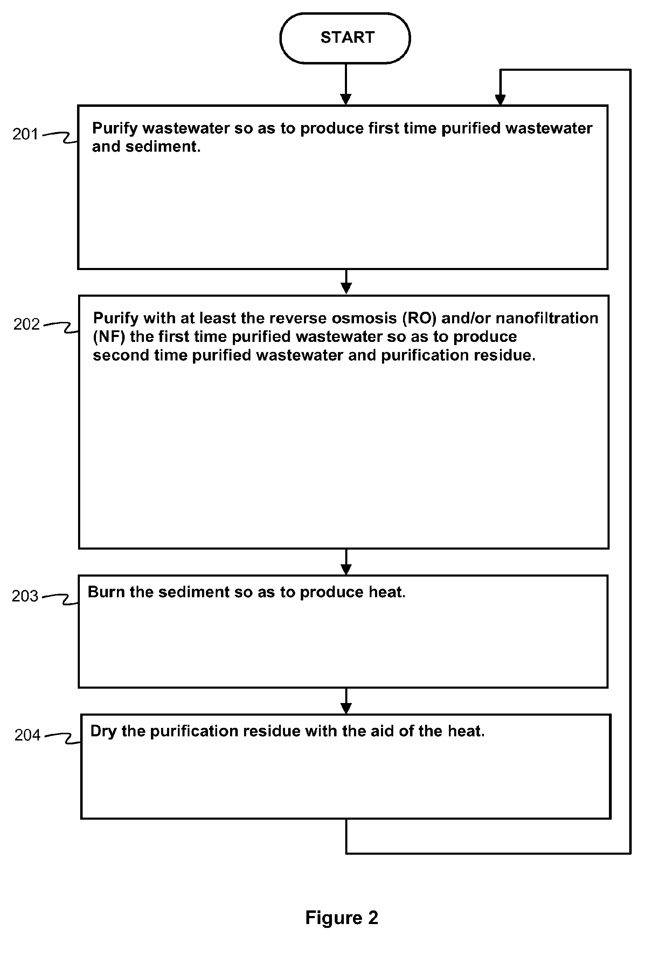

Figure 2 shows a flowchart of a process according to an exemplifying and non-limiting embodiment of the invention for wastewater purification. The process comprises the following actions:
- action 201: purifying wastewater so as to produce first time purified wastewater and first sludge,
- action 202: purifying the first time purified wastewater so as to produce second time purified wastewater and purification residue, the first time purified wastewater being purified with at least one of the following: one or more reverse osmosis devices, one or more nanofiltration devices,
- action 203: burning the first sludge so as to produce heat, and
- action 204: drying the purification residue with the aid of the heat.

In a process according to an exemplifying and non-limiting embodiment of the invention, the purifying 202 the first time purified wastewater comprises:
- treating the first time purified wastewater so as to produce a first part of the second time purified water and intermediate purification residue, the first time purified wastewater being treated with at least one of the following: a first one of the reverse osmosis devices, a first one of the nanofiltration devices,
- treating the intermediate purification residual physico-chemically so as to produce second sludge and purified intermediate purification residue, the second sludge being burned together with the first sludge, and
- treating the purified intermediate purification residue so as to produce a second part of the second time purified water and the purification residue, the purified intermediate purification residue being treated with at least one of the following: a second one of the reverse osmosis devices, a second one of the nanofiltration device.

A process according to an exemplifying and non-limiting embodiment of the invention further comprises treating the second time purified water with ultraviolet radiation so as to disinfect the second time purified water.

In a process according to an exemplifying and non-limiting embodiment of the invention, the first time purified wastewater and the first sludge are produced with an activated sludge plant and/or a membrane-bioreactor.

In a process according to an exemplifying and non-limiting embodiment of the invention, a circulating fluidized bed "CFB" combustion reactor is used for burning material comprising at least the first sludge.

In a process according to an exemplifying and non-limiting embodiment of the invention, the first sludge is pre-dried prior to the burning the first sludge, the pre-drying being based on heat produced by combustion equipment for burning the first sludge. For example, a circulating fluidized bed dryer can be used for the pre-drying.

In a process according to an exemplifying and non-limiting embodiment of the invention, biogas is produced with the aid of the first sludge prior to the burning the first sludge.

A process according to an exemplifying and non-limiting embodiment of the invention comprises vaporizing working fluid with the aid of the heat produced by the burning the first sludge, and converting energy contained by the vaporized working fluid into electrical energy with the aid of an electrical turbo-machine. The working fluid can be organic working fluid and the Organic Rankine Cycle "ORC" process can be used for the energy conversion. The electrical energy is suitable for at least partly satisfying an energy need of the process for wastewater purification.

A process according to an exemplifying and non-limiting embodiment of the invention comprises burning auxiliary fuel together with material comprising at least the first sludge. The auxiliary fuel 135 can be for example Solid Recovered Fuel "SRF. A process according to an exemplifying and non-limiting embodiment of the invention comprises mechanically drying, e.g. by centrifuging, material comprising at least the first sludge prior to the burning the material.

Some exemplifying and non-limiting embodiments are defined below with the aid of numbered clauses with reference to the accompanying drawings:
Clause 1. A wastewater purification system comprising:
   - first purification equipment 101 for receiving wastewater and for outputting first time purified wastewater and first sludge, and
   - second purification equipment 102 for receiving the first time purified wastewater and for outputting second time purified wastewater and purification residue, the second purification equipment comprising at least one of the following for purifying the first time purified wastewater: one or more reverse osmosis devices, one or more nanofiltration devices,
   **characterized** in that the wastewater purification system further comprises:
   - combustion equipment 103 for burning the first sludge so as to produce heat, and
   - dryer equipment 104 for drying the purification residue with the aid of the heat produced by the combustion equipment.
Clause 2. A wastewater purification system according to Clause 1, wherein the second purification equipment comprises:
   - a first purification device 105 for receiving the first time purified wastewater and for outputting a first part of the second time purified water and intermediate purification residue, the first purification device comprising at least one of the following: a first one of the reverse osmosis devices, a first one of the nanofiltration devices,
   - a physico-chemical treatment device 106 for receiving the intermediate purification residue and for outputting second sludge and purified intermediate purification residue, and
   - a second purification device 107 for receiving the purified intermediate purification residue and for outputting a second part of the second time purified water and the purification residue, the second purification device comprising at least one of the following: a second one of the reverse osmosis devices, a second one of the nanofiltration devices.
Clause 3. A wastewater purification system according to Clause 1 or 2, wherein the wastewater purification system further comprises ultraviolet treatment equipment 108 for disinfecting the second time purified water.
Clause 4. A wastewater purification system according to any of Clauses 1-3, wherein the first purification equipment comprises at least one of the following: an activated sludge plant, a membrane-bioreactor.
Clause 5. A wastewater purification system according to any of Clauses 1-4, wherein the combustion equipment comprises a circulating fluidized bed combustion reactor.
Clause 6. A wastewater purification system according to any of Clauses 1-5, wherein the combustion equipment comprises a pre-dryer for pre-drying the first sludge prior to the burning the first sludge, the pre-drying being based on heat produced by combustion equipment.
Clause 7. A wastewater purification system according to Clause 6, wherein the pre-dryer is a circulating fluidized bed dryer.
Clause 8. A wastewater purification system according to any of Clauses 1-7, wherein the wastewater purification system comprises biogas production equipment 111 for receiving the first sludge from the first purification equipment, for producing biogas with the aid of the first sludge, and for outputting the first sludge to the combustion equipment.
Clause 9. A wastewater purification system according to any of Clauses 1-8, wherein the wastewater purification system comprises electrical power production equipment 109 comprising a boiler for vaporizing working fluid with the aid of the heat produced by the combustion equipment, and an electrical turbo-machine for converting energy contained by the vaporized working fluid into electrical energy suitable for at least partly satisfying an energy need of the wastewater purification system.
Clause 10. A wastewater purification system according to Clause 9, wherein the working fluid is organic working fluid.
Clause 11. A wastewater purification system according to any of Clauses 1-10, wherein combustion equipment is adapted to burn auxiliary fuel in addition to material comprising at least the first sludge.
Clause 12. A wastewater purification system according to any of Clauses 1-11, wherein wastewater purification system comprises a mechanical dryer for mechanically drying material comprising at least the first sludge prior to delivering the material to the combustion equipment.
Clause 13. A process for wastewater purification, the process comprising:
   - purifying 201 wastewater so as to produce first time purified wastewater and first sludge, and
   - purifying 202 the first time purified wastewater so as to produce second time purified wastewater and purification residue, the first time purified wastewater being purified with at least one of the following: one or more reverse osmosis devices, one or more nanofiltration devices,
   **characterized** in that the process further comprises:
   - burning 203 the first sludge so as to produce heat, and
   - drying 204 the purification residue with the aid of the heat.
Clause 14. A process according to Clause 13, wherein the purifying 202 the first time purified wastewater comprises:
   - treating the first time purified wastewater so as to produce a first part of the second time purified water and intermediate purification residue, the first time purified wastewater being treated with at least one of the following: a first one of the reverse osmosis devices, a first one of the nanofiltration devices,
   - treating the intermediate purification residual physico-chemically so as to produce second sludge and purified intermediate purification residue, the second sludge being burned together with the first sludge, and
   - treating the purified intermediate purification residue so as to produce a second part of the second time purified water and the purification residue, the purified intermediate purification residue being treated with at least one of the following: a second one of the reverse osmosis devices, a second one of the nanofiltration device.
Clause 15. A process according to Clause 13 or 14, wherein the process further comprises treating the second time purified water with ultraviolet radiation so as to disinfect the second time purified water.
Clause 16. A process according to any of Clauses 13-15, wherein the first time purified wastewater and the first sludge are produced with at least one of the following; an activated sludge plant, a membrane-bioreactor.
Clause 17. A process according to any of Clauses 13-16, wherein a circulating fluidized bed combustion reactor is used for burning material comprising at least the first sludge.
Clause 18. A process according to any of Clauses 13-17, wherein the first sludge is pre-dried prior to the burning the first sludge, the pre-drying being based on heat produced by combustion equipment for burning the first sludge.
Clause 19. A wastewater purification system according to Clause 18, wherein a circulating fluidized bed dryer is used for the pre-drying.
Clause 20. A process according to any of Clauses 13-19, wherein biogas is produced with the aid of the first sludge prior to the burning the first sludge.
Clause 21. A process according to any of Clauses 13-20, wherein the process comprises vaporizing working fluid with the aid of the heat produced by the burning the first sludge, and converting energy contained by the vaporized working fluid into electrical energy with the aid of an electrical turbo-machine, the electrical energy being suitable for at least partly satisfying an energy need of the process for wastewater purification.
Clause 22. A process according to Clause 21, wherein the working fluid is organic working fluid.
Clause 23. A process according to any of Clauses 13-22, wherein the process comprises burning auxiliary fuel together with material comprising at least the first sludge.
Clause 24. A process according to any of Clauses 13-23, wherein the process comprises mechanically drying material comprising at least the first sludge prior to the burning the material.

The specific examples provided in the description given above should not be construed as limiting. Therefore, the invention is not limited merely to the embodiments described above.

## Claims

1. A wastewater purification system comprising:
- first purification equipment (101) for receiving wastewater and for outputting first time purified wastewater and first sludge, and
- second purification equipment (102) for receiving the first time purified wastewater and for outputting second time purified wastewater and purification residue, the second purification equipment comprising at least one of the following for purifying the first time purified wastewater: one or more reverse osmosis devices, one or more nanofiltration devices,
**characterized in that** the wastewater purification system further comprises:
- combustion equipment (103) for burning the first sludge so as to produce heat, and
- dryer equipment (104) for drying the purification residue with the aid of the heat produced by the combustion equipment.

2. A wastewater purification system according to claim 1, wherein the second purification equipment comprises:
- a first purification device (105) for receiving the first time purified wastewater and for outputting a first part of the second time purified water and intermediate purification residue, the first purification device comprising at least one of the following: a first one of the reverse osmosis devices, a first one of the nanofiltration devices,
- a physico-chemical treatment device (106) for receiving the intermediate purification residue and for outputting second sludge and purified intermediate purification residue, and
- a second purification device (107) for receiving the purified intermediate purification residue and for outputting a second part of the second time purified water and the purification residue, the second purification device comprising at least one of the following: a second one of the reverse osmosis devices, a second one of the nanofiltration devices.

3. A wastewater purification system according to claim 1 or 2, wherein the wastewater purification system further comprises ultraviolet treatment equipment (108) for disinfecting the second time purified water.

4. A wastewater purification system according to any of claims 1-3, wherein the first purification equipment comprises at least one of the following: an activated sludge plant, a membrane-bioreactor.

5. A wastewater purification system according to any of claims 1-4, wherein the combustion equipment comprises a circulating fluidized bed combustion reactor.

6. A wastewater purification system according to any of claims 1-5, wherein the combustion equipment comprises a pre-dryer for pre-drying the first sludge prior to the burning the first sludge, the pre-drying being based on heat produced by combustion equipment.

7. A wastewater purification system according to claim 6, wherein the pre-dryer is a circulating fluidized bed dryer.

8. A wastewater purification system according to any of claims 1-7, wherein the wastewater purification system comprises biogas production equipment (111) for receiving the first sludge from the first purification equipment, for producing biogas with the aid of the first sludge, and for outputting the first sludge to the combustion equipment.

9. A wastewater purification system according to any of claims 1-8, wherein the wastewater purification system comprises electrical power production equipment (109) comprising a boiler for vaporizing working fluid with the aid of the heat produced by the combustion equipment, and an electrical turbo-machine for converting energy contained by the vaporized working fluid into electrical energy suitable for at least partly satisfying an energy need of the wastewater purification system.

10. A wastewater purification system according to claim 9, wherein the working fluid is organic working fluid.

11. A wastewater purification system according to any of claims 1-10, wherein combustion equipment is adapted to burn auxiliary fuel in addition to material comprising at least the first sludge.

12. A wastewater purification system according to any of claims 1-11, wherein wastewater purification system comprises a mechanical dryer for mechanically drying material comprising at least the first sludge prior to delivering the material to the combustion equipment.

13. A process for wastewater purification, the process comprising:
- purifying (201) wastewater so as to produce first time purified wastewater and first sludge, and
- purifying (202) the first time purified wastewater so as to produce second time purified wastewater and purification residue, the first time purified wastewater being purified with at least one of the following: one or more reverse osmosis devices, one or more nanofiltration devices,
**characterized in that** the process further comprises:
- burning (203) the first sludge so as to produce heat, and
- drying (204) the purification residue with the aid of the heat.

14. A process according to claim 13, wherein the purifying (202) the first time purified wastewater comprises:
- treating the first time purified wastewater so as to produce a first part of the second time purified water and intermediate purification residue, the first time purified wastewater being treated with at least one of the following: a first one of the reverse osmosis devices, a first one of the nanofiltration devices,
- treating the intermediate purification residual physico-chemically so as to produce second sludge and purified intermediate purification residue, the second sludge being burned together with the first sludge, and
- treating the purified intermediate purification residue so as to produce a second part of the second time purified water and the purification residue, the purified intermediate purification residue being treated with at least one of the following: a second one of the reverse osmosis devices, a second one of the nanofiltration device.

15. A process according to claim 13 or 14, wherein the process further comprises treating the second time purified water with ultraviolet radiation so as to disinfect the second time purified water.
